# EUROPEAN PATENT SPECIFICATION

(11) **EP 4 641 540 B1**
(45) Date of publication and mention of the grant of the patent: **21.10.2026**
(21) Application number: 25166973.5
(22) Date of filing: 28.03.2025
(51) Int. Cl.: G08B 25/01, G08G 1/00

(54) **METHOD FOR DETECTING AN ACCIDENT OF A VEHICLE**
VERFAHREN ZUM ERKENNEN EINES UNFALLS EINES FAHRZEUGS
PROCÉDÉ DE DÉTECTION D'UN ACCIDENT D'UN VÉHICULE

(30) Priority: 26.04.2024 IT 202400009544
(43) Date of publication of application: 29.10.2025
(73) Proprietor: Cerri, Paola, 16146 Genova (IT)
(72) Inventor: Cerri, Paola, 16146 Genova (IT)
(74) Representative: Perani & Partners S.p.A.

(56) References cited:
- US-A1- 2017 053 461
- US-A1- 2019 354 838

## Description

### Technical Field

The present invention relates to a method for detecting an accident of a vehicle, such as road accidents, natural disasters, weather, water events, illness, etc. The method according to the present invention is carried out by a mobile device associated with a user in the vehicle.

### Background Art

Several methods for reporting a road accident, a natural disaster, a weather event, or an illness in order to alert the competent authorities and rescue services are known in the background art. These methods substantially envisage an individual directly or indirectly witnessing the event, be it a road accident, natural disaster, weather event, etc., and alerting the rescue services and competent authorities via a mobile or fixed device. Specifically, the individual witnessing the event can call the rescue services on the dedicated phone numbers via mobile or landline. Alternatively, applications are known in the background art that can be installed on mobile devices allowing to directly alert the rescue services and the competent authorities by interacting with a related user interface.

US 2017/053461 A1 and US 2019/354838 A1 disclose automatically detecting an accident of a vehicle while avoiding false alarms.

### Prior art problems

Known methods for detecting an accident are passive methods where it is necessary that an individual witnesses the event and alerts the authorities and the rescue services. This individual, especially when directly involved in the event, might provide inaccurate and little detailed information on the event, thus lengthening the intervention time. Furthermore, when in an unconscious state, the individual would not be able to provide any information at all. It should be noted that, disadvantageously, known methods, based on indirectly received information, do not allow to properly manage the resources during the intervention, such as in organizing the triage.

### Object of The Invention

It is an object of the invention in question to carry out a method for detecting an accident which is capable of overcoming the aforementioned drawbacks of the prior art.

In particular, it is an object of the present invention to provide a method for detecting an accident which is capable of improving the detection and reporting of an accident, thus reducing the intervention time of the rescue services.

The stated technical task and specified objects are substantially achieved by a method for detecting an accident comprising the technical features set forth in one or more of the appended claims.

### Advantages of the invention

Advantageously, the method of the present invention allows to detect an accident by taking into account objective parameters obtained from a mobile device and from devices associated therewith.

Advantageously, the method of the present invention allows to quickly alert the rescue services and competent authorities regardless of the condition of the individual(s) involved in the detected accident.

### BRIEF DESCRIPTION OF THE FIGURES

Further features and advantages of the present invention will be more apparent from the indicative and therefore non-limiting description of a preferred, though not exclusive, embodiment of a method for detecting an accident as illustrated in the accompanying drawings, wherein:
- Figure 1 shows a block diagram of the method for detecting an accident according to an embodiment of the present invention;

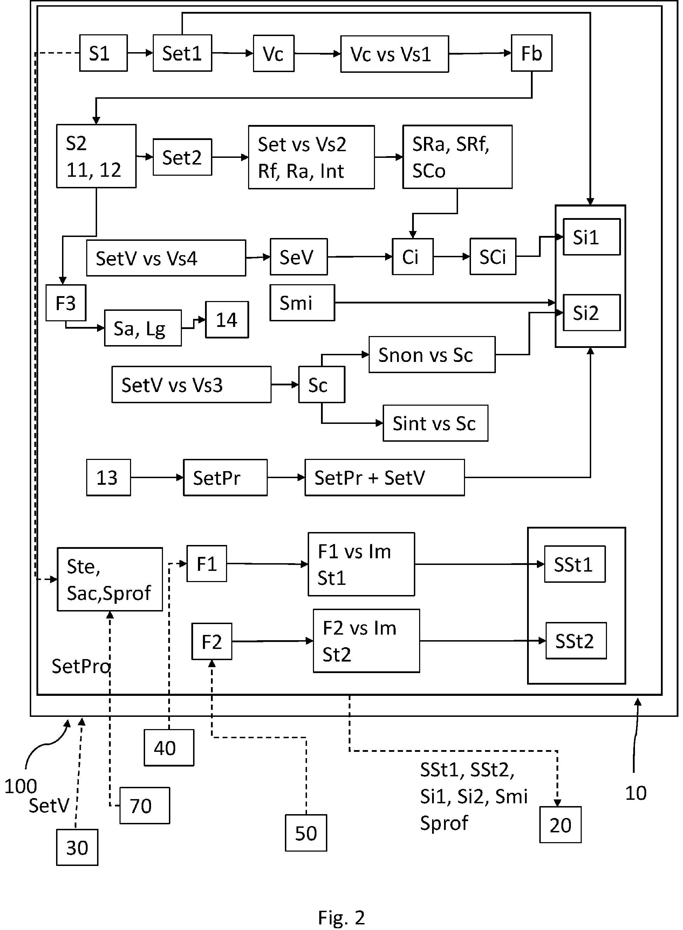

- Figure 2 schematically shows a system for detecting an accident according to an embodiment of the present invention.

### DETAILED DESCRIPTION

Even if not explicitly mentioned, the individual features described with reference to specific embodiments are to be understood as optional and/or interchangeable with other features described with reference to other embodiment examples.

The present invention relates to a method for detecting an accident 1 of a vehicle 100 preferably provided with a cabin. The vehicle can be selected from a motor vehicle, such as a car, truck, motorcycle, etc., and a boat. It is worth noting that cabin means the place in the vehicle where passengers can stay and depends on the type of vehicle.

The method for detecting an accident 1 is carried out by means of a mobile device 10, such as, for example, a smartphone, associated with a user. This mobile device 10 comprises a data processing unit configured to manage and process at least part, preferably all data received as an input, a screen on which it is possible to interact by a user interface 13, a connection unit configured to place the mobile device 10 in signal communication with other devices and servers, and a storage unit, sensors and image capturing devices, such as one or more cameras.

The method of the present invention allows to detect an accident in which one or more vehicles are involved. The accident can be a road accident, a natural disaster, a weather event, a water-type event, or an illness of the user the mobile device is associated with. Preferably, the user can access the method by means of a resident application, i.e. an application installed on the mobile device. It is worth noting that after the installation, the user can access the application via the user interface 13 from which it is also possible to receive notification signals projected on the screen, such as "push notifications".

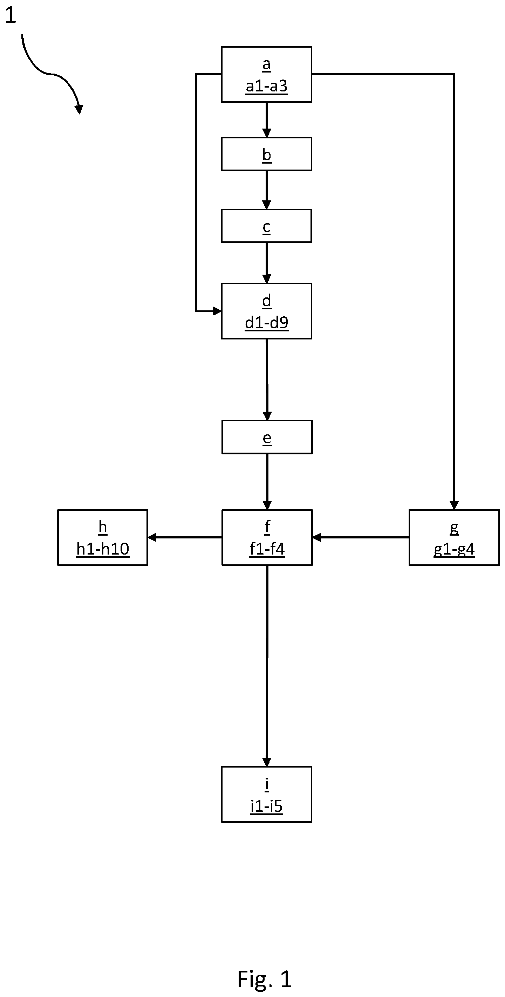

The method for detecting an accident 1 of the present invention comprises the steps set forth below, performed according to a preferred embodiment shown in Figure 1.

According to a preferred embodiment, the method comprises a preliminary step of registering the user on a platform associated with the application. Preferably, once installed, the application is configured to run in the background, as is known to the person skilled in the art.

The method comprises a step a) of capturing a first dataset Set1 by first geolocalization sensors S1 embedded in the mobile device 10 in sampling time intervals. It is worth noting that the geolocalization sensors are in signal communication with navigation systems such as GPS, GLONASS, or Galileo, for the geolocalization. The method allows thereby the position of the mobile device 10 along a road travelled by a vehicle 100 to be known.

According to a preferred embodiment, step a) comprises step a1) of capturing a preliminary dataset SetPr relating to the users in the vehicle 100 by input from the user interface 13 associated with the mobile device 10. Specifically, by accessing the user interface 13 from the screen of the mobile device, a user can enter data relating to each user in the vehicle, e.g. medical information and clinical history, together with information on the family members/passengers. Step a) can also comprise a step a2) of capturing vital parameters SetV of the users located in the vehicle by vital parameters capturing devices 30 associated with the users located in the vehicle. Specifically, step a2) involves placing in signal communication the vital parameters capturing devices 30 such as, for example, smartwatches associated with the users. Step a2) thereby allows vital parameters, such as heart rate, blood pressure, blood oxygen saturation, and electrocardiogram to be captured. Furthermore, when step a2) is present, step a) also comprises step a3) of associating the vital parameters SetV with each related preliminary dataset SetPr.

The method comprises a step b) of calculating a vehicle cruising speed Vc by the first dataset Set1 in each sampling time interval. Preferably, step b) involves, for example, calculating the cruising speed Vc by taking into account the time taken to travel a certain distance through geolocalization.

The method comprises a step c) of identifying an abrupt braking Fb in case a comparison between cruising speeds Vc in temporally successive sampling intervals exceeds first predefined threshold values Vs1. Specifically, step c) involves identifying a deceleration that can be associated with an abrupt braking Fb and the speed reduction exceeds a predefined value, and generating a related signal.

The method comprises a step d) in which, if an abrupt braking Fb is identified, it involves capturing a second dataset Set2 by second sensors S2 embedded in the device 10, and identifying an accident condition Ci by comparing values associated with the second dataset Set2 and second predefined threshold values Vs2. It is worth noting that the second dataset Set2 is representative of the conditions inside the vehicle 100 where the one or more users are located, preferably in the cabin. The method of the present invention thereby allows to distinguish between an abrupt braking due to an event external to the vehicle and an accident, thus avoiding false alarms.

According to a preferred embodiment, step d) involves capturing data relating to sounds inside the vehicle, preferably where the one or more users are located, by a microphone 11 embedded in the device as one of the second sensors S2.

Specifically, step d) involves step d1) of activating the microphone 11 if an abrupt braking Fb is identified. Next, step d) involves step d2) of recording sounds inside the vehicle, preferably where the one or more users are located, by the microphone 11. It is worth noting that step d2) is carried out starting from the identification of the abrupt braking Fb. Once the sounds are recorded, step d) comprises a step d3), carried out in a time interval following the recording or simultaneously therewith, of identifying a loud noise Rf in case the recorded sounds exceed the second predefined threshold values Vs2 relating to the noises. In case these threshold values are exceeded, step d3) involves generating a loud noise signal SRf. Specifically, the second threshold values Vs2 comprise noise thresholds associated with noises that can be recognized as loud noises associated with an accident. Simultaneously or alternatively, step d) comprises step d4) of identifying a request for help Ra in case the recorded sounds Rs correspond to the second predefined threshold values Vs2 relating to a request for help, and generating a request for help signal SRa. Specifically, the second threshold values Vs2 comprise recorded threshold sounds associated with keywords that can be found in an accident and pronounced by users. Step d) further comprises a step d5) of identifying the accident condition Ci by generating a related accident condition signal SCi in case a loud noise signal SRf or a request for help signal SRa is generated.

According to the invention, step d) involves in any case capturing data relating to requests for help generated by the interaction between user and device 10. Specifically, step d) comprises step d6) of activating pressure sensors 12 embedded in the device 10 as second sensors S2 if an abrupt braking Fb is identified. In detail, step d6) involves activating conductive or resistive sensors configured to receive a user-screen interaction signal, such as typical for the touchscreen contact. Next, step d) comprises step d7) of detecting the interaction Int of the user with the mobile device 10 by the pressure sensors 12 activated in case the interaction corresponds to the second predefined threshold values Vs2 relating to an interaction of the user with the mobile device 10. Specifically, the second threshold values Vs2 comprise sensitivity thresholds associated with the user-screen interaction of the mobile device. Step d) comprises a step d8) of generating an accident confirmation signal SCo in case the interaction on the mobile device 10 is detected. Next, step d) comprises step d9) of identifying the accident condition Ci by generating a related accident condition signal SCi in case the accident confirmation signal SCo is generated.

According to a preferred embodiment that is alternative to and combinable with the previous ones, step d) involves identifying an accident condition Ci by comparing the vital parameters SetV with fourth threshold values Vs4 associated with an accident condition. Specifically, step d) comprises step d10) of comparing the vital parameters SetV with the fourth threshold values Vs4 if an abrupt braking Fb is identified. These fourth threshold values comprise limit vital parameter values for users involved in an accident. Next, step d) comprises step d11) of generating a vital emergency signal SeV in case the vital parameters SetV fall within an emergency range of the fourth threshold values Vs4. Finally, step d) comprises step d12) of identifying the accident condition Ci by generating a related accident condition signal Sci in case a vital emergency signal SeV is generated.

It is worth noting that steps d6)-d9) are always carried out, while steps d1)-d5), and d10)-d12) are optional additional steps and they can also be sequentially combined to generate each a related accident condition signal SCi to ascertain the actual occurrence of an accident. It is thereby possible to increase the redundancy in detection in case part of the second sensors have failed in the accident or in case the captured sets fall within ranges of values of the related predefined value sets identified as questionable.

The method comprises a step e) of generating a first accident signal Si1 if an accident condition Ci is identified.

The method comprises a step f) of sending the first accident signal Si1 from the mobile device 10 associated with the user to one or more external devices 20 placed in signal communication with each other. Specifically, at least one external device 20 is associated with the rescue services. Preferably, the external device 20 associated with the rescue services is a device external to the vehicle placed in signal communication with the mobile device 10 and in an operations centre of a rescue system, which in turn may be in signal communication with systems relating to competent authorities, such as the police force, the civil protection department, etc.

Preferably, the external devices 20 can also be associated with further travelling or departing users that are provided of an application capable of performing the described method. These users can receive the signal as a notification signal on the user interface so as to be alerted of the situation on the route to be taken on the roads regarding possible delays or traffic. Furthermore, the external devices 20 can also be associated with relatives and acquaintances of the user involved in the accident the mobile device 10 is associated with to alert them of the event.

According to a preferred embodiment, the method further comprises a step g) of monitoring the vital parameters. Preferably, step g) can be carried out in parallel to other steps. Specifically, step g) comprises step g1) of comparing, in sampling time intervals, the vital parameters SetV of each user with third predefined threshold values Vs3. Specifically, the third threshold values relate to standard health conditions depending on the user. Step g) comprises a step g2) of generating a control signal Sc in case the values of the vital parameters SetV exceed the third predefined threshold values Vs3 in several temporally successive sampling time intervals. Next, step g) comprises step g3) of waiting for a control time interval for an interaction of the user with the device by pressure sensors 12 embedded in the device 10 as second sensors S2 to generate an interaction signal Sint, otherwise generating a non-interaction signal Snon, in case a control signal Sc is generated. Finally, step g) comprises step g4) of generating a second accident signal Si2 in case in the control time interval a non-interaction signal Snon is generated.

It is worth noting that step f) involves sending the second accident signal from the mobile device 10 to at least the external device 20 associated with the rescue services. As mentioned above, according to a preferred embodiment, the second accident signal Si2 can be sent to external devices 20 that can be associated with further travelling or departing users provided with an application capable of performing the method described herein and/or with relatives and acquaintances of the user involved in the illness the mobile device 10 is associated with.

Preferably, step f) is carried out by placing the mobile device in signal communication with the one or more external devices and at least the external device 20 associated with the rescue services via Internet connection. Alternatively, in the event there is no Internet signal, step f) can be carried out by placing the mobile device 10 in direct signal communication via a satellite device with the at least the external device 20 associated with the rescue services. In case a satellite device is employed, a related satellite device is associated both with the mobile device 10 and the external device associated with the rescue services.

Advantageously, the method of the present invention allows emergency signals to be sent regardless of network conditions.

According to a preferred embodiment, step f) comprises step f1) of detecting a location of the accident from the first dataset Set1 by the first geolocalization sensors S1. Next, step f) comprises step f2) of associating the location of the accident with the first accident signal Si1 and the second accident signal Si2. Furthermore, step f) comprises step f3) of associating user information, if uploaded in step a), with the first accident signal Si1 and the second accident signal Si2. Finally, step f) comprises step f4) of generating and periodically sending an accident monitoring signal Smi associated with the vital parameters SetV to the at least one external device associated with the rescue services, in case the first or second accident signal Si1, Si2 is generated.

Advantageously, the method of the present invention allows one or more users to be alerted of the occurrence of an accident and of the updates thereof based on the location of the receiving device and the route set for a destination of interest.

Advantageously, the method of the present invention allows the rescue services and, therefore, the rescuers, to be alerted based on the detection of the accident, by providing information not only on the accident itself, but also information on individuals involved, whose data has been provided as well.

Advantageously, the method of the present invention allows to provide emergency resources available in the vicinity of the accident, such as hospitals, veterinarians, pharmacies, police stations and assembly stations, enabling users to quickly access the aid they need in case the emergency is not extremely severe.

According to a preferred embodiment, in case the accident signal Si1, Si2 are generated, step f1) comprises sub-step f1.1) of identifying whether the mobile device 10 is located on land or water based on the first dataset Set1 and generating a respective land signal Ste or water signal Sac. Next, step f1) comprises sub-step f1.2), by a depth sensor 70 in signal communication with the mobile device 20, in case a water signal Sac is generated, of capturing a dataset representative of the depth SetPro at which the depth sensor 70 lies with respect to the water level. Indeed, in case of a water accident the user can be thrown into the water due to the strong deceleration/collision or can fall in the water due to illness, whereas in case of a land accident the vehicle can fall into the water or the user can be thrown into the water due to the accident. Preferably, the depth sensors 70 are associated with, more preferably embedded in the vital parameters capturing device 30 the user is wearing. Alternatively, the depth sensors 70 can be embedded in the mobile device 10 or in part of the devices that can be coupled to the mobile device 10, such as, for example, necklaces, bracelets or other types of objects that can be easily carried by a user and that can be placed in signal communication with the mobile device 10 through the related electronics. Next, step f1) comprises sub-step f1.3) of generating, at time intervals, a depth monitoring signal Sprof representative of the depth with respect to the water level at which the depth sensor 70 lies based on the related dataset SetPro. Preferably, the sub-step f1.3) involves associating the depth signal Sprof to a user the depth sensor is associated with. It is worth noting that, according to a preferred embodiment, sub-step f1.2) involves capturing and sending to the mobile device 10 the dataset representative of the depth SetPro at which the depth sensor 70 lies with respect to the water level, for example by measuring the pressure so as to monitor the depth at which the depth sensor lies. Accordingly, sub-step f1.3) involves generating in the mobile device 10 the depth monitoring signal Sprof based on the dataset received by the depth sensor. Alternatively, step f1.3) involves generating the depth monitoring signal Sprof in the depth sensor 70 and then sending it to the rescue services via the mobile device 10 in sub-step f1.4), as described below.

Finally, step f1) comprises sub-step f1.4) of periodically sending the depth monitoring signals Sprof to the at least one external device 20 associated with the rescue services.

Advantageously, the method of the present invention, in the event of an accident at the sea or in a lake, allows to detect the depth in synergy with geolocalization, thus improving search and rescue capabilities. According to a preferred embodiment, the use of the vital parameters detection device 30, such as, for example, a smartwatch, integrated with depth sensors 70 improves search and rescue capabilities when combined with geolocalization. Preferably, by embedding depth sensors in the smartwatch, in conjunction with GPS geolocalization technology, the method allows to detect the exact location of the body of the user wearing the smartwatch in the water and provide rescuers with crucial information to conduct more efficient and targeted rescue operations.

Thanks to the synergy between geolocalization and depth sensors, the method allows to optimize response times in emergency situations in aquatic environments, thus increasing the probability of rescue and improving the overall safety of users.

According to a preferred embodiment, the method further comprises a step h) of monitoring the accident by first image capturing devices 40 associated with the vehicle 100 in case a first or a second accident signal Si1, Si2 is generated. Specifically, step h) comprises step h1) of capturing a first image stream F1 from each first image capturing device 40. Next, step h) comprises step h2) of sending each first image stream to the mobile device 10 in signal communication with each first image capturing device 40. Next, step h) comprises step h3) of identifying a first accident state St1 by comparing the first image stream with sample images Im and generating a related first state signal SSt1. Specifically, the first accident state St1 is representative of the type of the accident, e.g. road accident, natural disaster, weather, water event, or illness, and the evolution thereof. Next, step h) comprises the step h4) of sending the first state signal SSt1 to at least the external device associated with the rescue system. Furthermore, step h) comprises step h5) of repeating steps h3) and h4) at control time intervals. It is thereby possible to control the evolution of the accident.

According to a preferred embodiment, step h) involves placing the mobile device 10 in signal communication with second image capturing devices 50 external to the vehicle 100 in case a first or a second accident signal Si1, Si2 is generated. Specifically, the second image capturing devices 50 can comprise surveillance systems arranged along the road route or in areas near docks, ports, platforms, lighthouses, etc. Preferably, step h) comprises step h6) of capturing a second image stream F2 from each second image capturing device 50. Next, step h) comprises step h7) of sending each second image stream F2 to the mobile device 10 in signal communication with each second image capturing device 50. Next, step h) comprises step h8) of identifying a second accident state St2 by comparing the second image stream with sample images and generating a related state signal SSt2. Specifically, the second accident state St2 is representative of the evolution of the accident and the environment in which it occurred. Next, step h) comprises step h9) of sending the second state signal SSt2 to at least the external device associated with the rescue system. Finally, step h) comprises step h10) of repeating steps h8) and h9) at control time intervals in order to monitor the accident.

Advantageously, step h) allows to provide the rescue services with an overview and a periodic update on the accident location so that they are informed before and also during the intervention.

According to a preferred embodiment, the method can comprise a step of sending the state signals to an augmented reality device, such as smart glasses rescuers can wear to improve the quality of the intervention.

According to a preferred embodiment, the method further comprises a step i) of assisting the user in case a first or a second accident signal Si1, Si2 is generated. Preferably, step i) can be configured as augmented reality assistance using the cameras of the mobile device and the screen thereof. More preferably, step i) can be also carried out through an augmented reality device wearable by the user. Specifically, step i) comprises step i1) of capturing the user information from the preliminary dataset SetPr and the vital parameters set. Next, step i) comprises step i2) of capturing a third image stream F3 by an image capturing device embedded in the mobile device 10. Next, step i) comprises step i3) of identifying a current accident state Sa by processing the third image stream. Once the image stream has been processed, step i) comprises step i4) of generating guidelines Lg based on the current state and user information. Finally, step i) comprises step i5) of projecting the guidelines and directions on a user interface associated with the mobile device or augmented reality device.

It is worth noting that each dataset and image stream captured can be stored in the mobile device and/or sent to a server to be stored and subsequently processed.

According to a preferred embodiment, the processing of datasets and image streams, the generation of signals and the sending thereof can be carried out by the data processing unit embedded in the mobile device 10 or delegated to servers in signal communication with the mobile device 10. Specifically, the method involves switching between storing and processing datasets and image streams in the mobile device 10 and in the servers depending on the network coverage, i.e. the possibility of connecting to the servers and the Internet.

Advantageously, storing the datasets and image stream in the storage unit of the mobile device 10 as well, and the processing thereof, allow to detect and report the accident even in case of failure to connect to the servers.

According to a preferred embodiment, the method involves using an artificial intelligence algorithm for detecting an accident condition so as to generate the first accident signal and the second accident signal, the state signals and the guidelines by a trainable prediction function. Specifically, the artificial intelligence algorithm is configured to receive the datasets captured by the sensors and the image streams as an input, and to output the first or the second accident signal, the state signals and the guidelines, so as to report the occurrence of an accident, the state thereof, and provide information for the intervention. This artificial intelligence algorithm is provided with an overall list of predefined threshold values and sample images associated with the prediction function. It is worth noting that the artificial intelligence algorithm comprises a training function configured to acquire learning datasets based on the accident conditions, the state and control signals, and to modify the prediction function. Preferably, this modification occurs based on the signals generated and the actual match between captured datasets and image streams of the accident and user interactions. This prediction function is configured to update threshold values and sample images to correctly identify an accident.

According to a preferred embodiment, the updated threshold values and sample images are periodically modified in the storage unit of the mobile device 10 as well, so as to have updated threshold values sets and sample images in the event of no connection to the Internet.

Preferably, the artificial intelligence algorithm resides on the servers in signal communication with the mobile device 10. It is worth noting that, in case of no connection between mobile device 10 and server, the generation of signals and guidelines is carried out by the data processing unit by means of classic comparison algorithms based on comparing and exceeding stored threshold values.

Advantageously, the method of the present invention allows an accident to be detected and monitored regardless of the connection to the Internet.

Advantageously, the method of the present invention allows to provide on-site aid by means of virtual aid.

Advantageously, the method of the present invention allows to provide, in the waiting time for rescue, detailed instructions on what to do during the specific emergency, through the previously performed training of the integrated artificial intelligence, such as suggestions for evacuation in the event of imminent danger or for first aid in the event of illness, or road or water accident. These first aid instructions are projected on the user interface and are guided through audio playback so that they can be used by the user themselves or by a person nearby (e.g. clearing manoeuvre in the event of choking, cardiopulmonary resuscitation, use of semi-automatic defibrillators, etc.)

A system can also be designed for detecting an accident configured to carry out the method described above. The system does not belong to the claimed invention.

The non-claimed system comprises a mobile device 10, for example a smartphone comprising a screen on which a user interface 13 is accessible, first and second sensors S1, S2, and an image capturing device, such as cameras. Preferably, the first sensors comprise geolocalization sensors and the second sensors comprise a microphone and pressure sensors. It is worth noting that the mobile device 10 comprise, as is known, a data processing unit, a connection unit, and a storage unit. The mobile device 10 is thereby configured to receive and capture data and process them to generate related signals and communicate them to devices connected thereto and/or project them on the screen as described in the method. It is worth noting that the mobile device 10 comprises a storage unit for storing information, for example in the form of an algorithm as well as installed application, to carry out the method described above. Furthermore, the storage unit can comprise storing threshold values, datasets, sample images and image streams and related classic processing algorithms to generate signals and guidelines.

The non-claimed system comprises one or more servers in signal communication with the mobile device 10. In this way, the mobile device 10 can send datasets and image streams to the servers in order to store and process them by means of the artificial intelligence algorithm depending on the connection to the Internet.

It is worth noting that the artificial intelligence algorithm trained with the related database reside on said servers.

According to a non-claimed implementation, external devices 20, such as computer terminals and mobile devices, where at least one of these external devices 20 is associated with the rescue services so that they can intervene once the related signal is received. Preferably, the external devices 20 can also be associated with relatives and acquaintances of the user involved in the accident the mobile device 10 is associated with to alert them of the event. Furthermore, the external devices 20 can be associated with any user who has installed a related application configured to perform the method according to the present invention.

The non-claimed system comprises vital parameters capturing devices 30 such as, for example, smartwatches in signal communication with the mobile device 10 and configured to capture vital parameters by related sensors and periodically send them to the mobile device 10.

The non-claimed system comprises one or more depth sensors 70 configured to detect a dataset representative of the depth SetPro at which the sensor lies with respect to the water level. It is worth noting that, in the event of an accident, the depth sensor is configured to fall into the water together with the user it is associated with and is immersed in the liquid at increasingly greater depths up to a limit threshold.

Preferably, the depth sensor 70 is in signal communication with the mobile device and is configured to send the sets of data relating to the depth of the mobile device 10 that then process them to generate the depth monitoring signal Spro. Alternatively, the depth sensor 70 is configured to capture the dataset SetPro and generate the depth monitoring signal Spro to be sent to the mobile device 10 it is in signal communication with.

Preferably, the depth sensors are associated with, more preferably embedded in the vital parameters capturing device 30 the user is wearing, such as a smartwatch. Alternatively, the depth sensors can be embedded in the mobile device 10 or in devices that can be coupled to the mobile device 10, such as, for example, necklaces, bracelets or other types of objects that can be easily carried by a user and that can be placed in signal communication with the mobile device 10 through the related electronics.

The non-claimed system comprises a vehicle 100 selected from a motor vehicle and a boat, preferably provided with a related cabin, i.e. a place in the vehicle where users can stay during the trip.

The non-claimed system comprises first image capturing devices 40 installed on the vehicle 100 and placed in signal communication with the mobile device 10 so as to send the related image streams.

The non-claimed system comprises second image capturing devices 50 installed along the road route or in areas near docks, ports, platforms, lighthouses, etc., and placed in signal communication with the mobile device 10 so as to send the related image streams.
system comprises a vehicle 100 that can be moved along a road route.

The non-claimed system comprises one or more augmented reality devices wearable by the user, such as Smart Glasses, the mobile device 10 is associated with, and/or by other occupants of the vehicle and/or by the rescuers in signal communication with the mobile device 10 and configured to assist the user, the occupants and the rescuers in the accident.

## Claims

1. A method for detecting an accident (1) of a vehicle (100) carried out by a mobile device (10) associated with a user in the vehicle (100), comprising the steps of:
a) capturing a first dataset (Set1) by first geolocalization sensors (S1) embedded in the mobile device (10) in sampling time intervals;
b) calculating a vehicle cruising speed (Vc) by the first dataset (Set1) in each sampling time interval;
c) identifying an abrupt braking (Fb) in case a comparison between cruising speeds (Vc) in temporally successive sampling intervals exceeds first predefined threshold values (Vs1);
d) if an abrupt braking (Fb) is identified, capturing a second dataset (Set2) by second sensors (S2) embedded in the device (10), and identifying an accident condition (Ci) by comparing values associated with the second dataset (Set2) and second predefined threshold values (Vs2), said second dataset (Set2) being representative of the conditions inside the vehicle (100);
e) if an accident condition (Ci) is identified, generating a first accident signal (Si1);
f) sending the first accident signal (Si1) from the mobile device (10) associated with the user to one or more external devices (20) placed in signal communication with each other, at least one external device (20) being associated with the rescue services;
**characterized in that** step d) involves capturing data relating to requests for help generated by the interaction between user and device (10), step d) comprising the steps of:
d6) if an abrupt braking (Fb) is identified, activating pressure sensors (12) embedded in the device (10), said second sensors (S2) comprising the pressure sensors;
d7) detecting the interaction (Int) of the user with the mobile device (10) by the pressure sensors (12) activated in case the interaction corresponds to the second predefined threshold values (Vs2) relating to an interaction of the user with the mobile device (10);
d8) generating an accident confirmation signal (SCo) in case the interaction on the mobile device (10) is detected;
d9) identifying the accident condition (Ci) by generating a related accident condition signal (SCi) in case the accident confirmation signal (SCo) is generated.

2. The method for detecting an accident (1) according to claim 1, wherein step d) involves capturing data relating to sounds inside the vehicle (100) by a microphone (11) embedded in the device as one of the second sensors (S2), step d) comprising the steps of:
d1) if an abrupt braking (Fb) is identified, activating the microphone (11);
d2) recording sounds inside the vehicle by the microphone (11);
d3) identifying a loud noise (Rf) in case the recorded sounds exceed the second predefined threshold values (Vs2) relating to the noises, and generating a loud noise signal (SRf);
d4) identifying a request for help (Ra) in case the recorded sounds (Rs) correspond to the second predefined threshold values (Vs2) relating to a request for help, and generating a request for help signal (SRa);
d5) identifying the accident condition (Ci) by generating a related accident condition signal (SCi) in case a loud noise signal (SRf) or a request for help signal (SRa) is generated.

3. The method for detecting an accident (1) according to any one of claims 1 to 2, wherein step a) comprises the steps of:
a1) capturing a preliminary dataset (SetPr) relating to the users located in the vehicle by input from a user interface (14) associated with the mobile device (10);
a2) capturing vital parameters (SetV) of the users located in the vehicle by vital parameters capturing devices (30) associated with the users located in the vehicle;
a3) associating the vital parameters (SetV) with each related preliminary dataset (SetPr).

4. The method for detecting an accident (1) according to claim 3, further comprising a step g) of monitoring the vital parameters, step g) comprising the steps of:
g1) comparing, in sampling time intervals, the vital parameters (SetV) of each user with third predefined threshold values (Vs3);
g2) generating a control signal (Sc) in case the values of the vital parameters (SetV) exceed the third predefined threshold values (Vs3) in several temporally successive sampling time intervals;
g3) in case a control signal (Sc) is generated, waiting for a control time interval for an interaction of the user with the device by pressure sensors (12) embedded in the device (10) to generate an interaction signal (Sint), otherwise generating a non-interaction signal (Snon), the second sensors (S2) comprising the pressure sensors (12);
g4) generating a second accident signal (Si2) in case in the control time interval a non-interaction signal (Snon) is generated.

5. The method for detecting an accident (1) according to claim 4, wherein step f) involves sending the second accident signal from the mobile device (10) to at least the external device (20) associated with the rescue services.

6. The method for detecting an accident (1) according to any one of claims 3 to 5, wherein step d) involves identifying an accident condition (Ci) by comparing the vital parameters (SetV) with fourth threshold values (Vs4) associated with an accident condition, step d) comprising the steps of:
d10) if an abrupt braking (Fb) is identified, comparing the vital parameters (SetV) with the fourth threshold values (Vs4);
d11) generating a vital emergency signal (SeV) in case the vital parameters (SetV) fall within the emergency range of the fourth threshold values (Vs4);
d12) identifying the accident condition (Ci) by generating a related accident condition signal (SCi) in case a vital emergency signal (SeV) is generated.

7. The method for detecting an accident (1) according to any one of claims 4 to 6, wherein step f) comprises the steps of:
f1) detecting a location of the accident from the first dataset (Set1) by the first geolocalization sensors (S1)
f2) associating the location of the accident with the first accident signal (Si1) and the second accident signal (Si2);
f3) associating the user information with the first accident signal (Si1) and the second accident signal (Si2);
f4) generating and periodically sending an accident monitoring signal (Smi) associated with the vital parameters (SetV) to the at least one external device associated with the rescue services, in case the first or second accident signal (Si1, Si2) is generated.

8. The method for detecting an accident (1) according to claim 7, wherein step f1), in case the accident signals (Si1, Si2) are generated, comprises the sub-steps of:
f1.1) identifying whether the mobile device (10) is positioned on land or water based on the first dataset (Set1) and generating a respective land signal (Ste) or water signal (Sac);
f1.2) by a depth sensor (70) in signal communication with the mobile device (10), in case a water signal (Sac) is generated, capturing a dataset representative of the depth (SetPro) at which the depth sensor (70) lies with respect to the water level;
f1.3) generating, at time intervals, a depth monitoring signal (Spro) representative of the depth with respect to the water level at which the depth sensor (70) lies based on the related dataset (SetPro);
f1.4) periodically sending the depth monitoring signals (Spro) to the at least one external device (20) associated with the rescue services.

9. The method for detecting an accident (1) according to any one of claims 4 to 8, further comprising a step h) of monitoring the accident by first image capturing devices (40) associated with the vehicle (100) in case a first or a second accident signal (Si1, Si2) is generated, said step h) comprising the steps of:
h1) capturing a first image stream (F1) from each first image capturing device (40);
h2) sending each first image stream to the mobile device (10) in signal communication with each first image capturing device (40);
h3) identifying a first accident state (St1) by comparing the first image stream with sample images (Im), and generating a related first state signal (SSt1);
h4) sending the first state signal (SSt1) to at least the external device associated with the rescue services;
h5) repeating steps h3) and h4) at control time intervals.

10. The method for detecting an accident (1) according to claim 9, wherein step h) involves placing the mobile device (10) in signal communication with second image capturing devices (50) external to the vehicle (100) in case a first or a second accident signal (Si1, Si2) is generated, said step h) comprising the steps of:
h6) capturing a second image stream (F2) from each second image capturing device (50);
h7) sending each second image stream (F2) to the mobile device (10) in signal communication with each second image capturing device (50);
h8) identifying a second accident state (St2) by comparing the second image stream with the sample images, and generating a related state signal (SSt2);
h9) sending the second state signal (SSt2) to at least the external device associated with the rescue services;
h10) repeating steps h8) and h9) at control time intervals.

11. The method for detecting an accident (1) according to any one of claims 4 to 10, further comprising a step i) of assisting the user in case a first or a second accident signal (Si1, Si2) is generated, step i) comprising the steps of:
i1) capturing the user information from the preliminary dataset (SetPr) and vital parameters (SetV);
i2) capturing a third image stream (F3) by an image capturing device embedded in the mobile device (10) as a second sensor (S2)
i3) identifying a current accident state (Sa) by processing the image stream
i4) generating guidelines (Lg) based on the current state and user information;
i5) projecting the guidelines and directions on a user interface associated with the mobile device.

12. The method for detecting an accident (1) according to claims 1, 4, 9, 10, and 11, involving using an artificial intelligence algorithm for detecting an accident condition so as to generate the first accident signal and the second accident signal, the state signals and the guidelines by a trainable prediction function, said artificial intelligence algorithm receiving the datasets captured by the sensors and the image streams as an input, and in order to output the first or the second accident signal, the state signals and the guidelines, the artificial intelligence algorithm having the threshold values and the sample images associated with the prediction function at disposal, the artificial intelligence algorithm comprising a training function configured to acquire learning datasets based on the accident conditions, the state and control signals, and to modify the prediction function.

## Patentansprüche

1. Verfahren zum Erfassen eines Unfalls (1) eines Fahrzeugs (100), das von einer mobilen Vorrichtung (10) ausgeführt wird, die einem Benutzer in dem Fahrzeug (100) zugeordnet ist, umfassend die folgenden Schritte: a) Erfassen eines ersten Datensatzes (Set1) durch erste Geolokalisierungssensoren (S1), die in der mobilen Vorrichtung (10) eingebettet sind, in Abtastzeitintervallen; b) Berechnen einer Fahrzeugfahrgeschwindigkeit (Vc) durch den ersten Datensatz (Set1) in jedem Abtastzeitintervall; c) Identifizieren eines abrupten Bremsens (Fb), falls ein Vergleich zwischen Fahrgeschwindigkeiten (Vc) in zeitlich aufeinanderfolgenden Abtastzeitintervallen erste vordefinierte Schwellenwerte (Vs1) überschreitet; d) wenn ein abruptes Bremsen (Fb) identifiziert wird, Erfassen eines zweiten Datensatzes (Set2) durch zweite Sensoren (S2), die in der Vorrichtung (10) eingebettet sind, und Identifizieren eines Unfallzustands (Ci) durch Vergleichen von Werten, die dem zweiten Datensatz (Set2) zugeordnet sind, mit zweiten vordefinierten Schwellenwerten (Vs2), wobei der zweite Datensatz (Set2) für die Zustände innerhalb des Fahrzeugs (100) repräsentativ ist; e) wenn ein Unfallzustand (Ci) identifiziert wird, Erzeugen eines ersten Unfallsignals (Si1); f) Senden des ersten Unfallsignals (Si1) von der mobilen Vorrichtung (10), die dem Benutzer zugeordnet ist, an eine oder mehrere externe Vorrichtungen (20), die in Signalkommunikation miteinander stehen, wobei mindestens eine externe Vorrichtung (20) den Rettungsdiensten zugeordnet ist; **dadurch gekennzeichnet, dass** Schritt d) das Erfassen von Daten in Bezug auf Hilfeanforderungen, die durch die Interaktion zwischen Benutzer und Vorrichtung (10) erzeugt werden, einbezieht, wobei Schritt d) die Schritte umfasst: d6) wenn ein abruptes Bremsen (Fb) identifiziert wird, Aktivieren von in der Vorrichtung (10) eingebetteten Drucksensoren (12), wobei die zweiten Sensoren (S2) die Drucksensoren umfassen; d7) Erfassen der Interaktion (Int) des Benutzers mit der mobilen Vorrichtung (10) durch die Drucksensoren (12), die aktiviert werden, falls die Interaktion den zweiten vordefinierten Schwellenwerten (Vs2) in Bezug auf eine Interaktion des Benutzers mit der mobilen Vorrichtung (10) entspricht; d8) Erzeugen eines Unfallbestätigungssignals (SCo), falls die Interaktion an der mobilen Vorrichtung (10) erfasst wird; d9) Identifizieren des Unfallzustands (Ci) durch Erzeugen eines zugehörigen Unfallzustandssignals (SCi), falls das Unfallbestätigungssignal (SCo) erzeugt wird.

2. Verfahren zum Erfassen eines Unfalls (1) nach Anspruch 1, wobei Schritt d) das Erfassen von Daten in Bezug auf Geräusche innerhalb des Fahrzeugs (100) mittels eines Mikrofons (11), das als einer der zweiten Sensoren (S2) in die Vorrichtung eingebettet ist, einbezieht, wobei Schritt d) die Schritte umfasst: d1) wenn ein abruptes Bremsen (Fb) identifiziert wird, Aktivieren des Mikrofons (11); d2) Aufzeichnen von Geräuschen innerhalb des Fahrzeugs durch das Mikrofon (11); d3) Identifizieren eines lauten Geräuschs (Rf), falls die aufgezeichneten Geräusche die zweiten vordefinierten Schwellenwerte (Vs2) in Bezug auf die Geräusche überschreiten, und Erzeugen eines Signals für ein lautes Geräusch (SRf); d4) Identifizieren einer Hilfeanforderung (Ra), falls die aufgezeichneten Geräusche (Rs) den zweiten vordefinierten Schwellenwerten (Vs2) in Bezug auf eine Hilfeanforderung entsprechen, und Erzeugen eines Hilfeanforderungssignals (SRa); d5) Identifizieren des Unfallzustands (Ci) durch Erzeugen eines zugehörigen Unfallzustandssignals (SCi), falls ein Signal für ein lautes Geräusch (SRf) oder ein Hilfeanforderungssignal (SRa) erzeugt wird.

3. Verfahren zum Erfassen eines Unfalls (1) nach einem der Ansprüche 1 bis 2, wobei Schritt a) die Schritte umfasst: a1) Erfassen eines vorläufigen Datensatzes (SetPr) in Bezug auf die im Fahrzeug befindlichen Benutzer durch Eingabe über eine Benutzerschnittstelle (14), die der mobilen Vorrichtung (10) zugeordnet ist; a2) Erfassen von Vitalparametern (SetV) der im Fahrzeug befindlichen Benutzer durch Vitalparameter-Erfassungsvorrichtungen (30), die den im Fahrzeug befindlichen Benutzern zugeordnet sind; a3) Zuordnen der Vitalparameter (SetV) zu jedem zugehörigen vorläufigen Datensatz (SetPr).

4. Verfahren zum Erfassen eines Unfalls (1) nach Anspruch 3, ferner umfassend einen Schritt g) des Überwachens der Vitalparameter, wobei Schritt g) die Schritte umfasst: g1) Vergleichen der Vitalparameter (SetV) jedes Benutzers mit dritten vordefinierten Schwellenwerten (Vs3) in Abtastzeitintervallen; g2) Erzeugen eines Steuersignals (Sc), falls die Werte der Vitalparameter (SetV) die dritten vordefinierten Schwellenwerte (Vs3) in mehreren zeitlich aufeinanderfolgenden Abtastzeitintervallen überschreiten; g3) im Falle der Erzeugung eines Steuersignals (Sc), Warten für ein Kontrollzeitintervall auf eine Interaktion des Benutzers mit der Vorrichtung durch in der Vorrichtung (10) eingebettete Drucksensoren (12), um ein Interaktionssignal (Sint) zu erzeugen, andernfalls Erzeugen eines Nicht-Interaktionssignals (Snon), wobei die zweiten Sensoren (S2) die Drucksensoren (12) umfassen; g4) Erzeugen eines zweiten Unfallsignals (Si2), falls im Kontrollzeitintervall ein Nicht-Interaktionssignal (Snon) erzeugt wird.

5. Verfahren zum Erfassen eines Unfalls (1) nach Anspruch 4, wobei Schritt f) das Senden des zweiten Unfallsignals von der mobilen Vorrichtung (10) an mindestens die externe Vorrichtung (20), die den Rettungsdiensten zugeordnet ist, einbezieht.

6. Verfahren zum Erfassen eines Unfalls (1) nach einem der Ansprüche 3 bis 5, wobei Schritt d) das Identifizieren eines Unfallzustands (Ci) durch Vergleichen der Vitalparameter (SetV) mit vierten Schwellenwerten (Vs4), die einem Unfallzustand zugeordnet sind, einbezieht, wobei Schritt d) die Schritte umfasst: d10) wenn ein abruptes Bremsen (Fb) identifiziert wird, Vergleichen der Vitalparameter (SetV) mit den vierten Schwellenwerten (Vs4); d11) Erzeugen eines vitalen Notsignals (SeV), falls die Vitalparameter (SetV) in den Notfallbereich der vierten Schwellenwerte (Vs4) fallen; d12) Identifizieren des Unfallzustands (Ci) durch Erzeugen eines zugehörigen Unfallzustandssignals (SCi), falls ein vitales Notsignal (SeV) erzeugt wird.

7. Verfahren zum Erfassen eines Unfalls (1) nach einem der Ansprüche 2 bis 6, wobei Schritt f) die Schritte umfasst: f1) Erfassen eines Ortes des Unfalls aus dem ersten Datensatz (Set1) durch die ersten Geolokalisierungssensoren (S1); f2) Zuordnen des Ortes des Unfalls zum ersten Unfallsignal (Si1) und zum zweiten Unfallsignal (Si2); f3) Zuordnen der Benutzerinformationen zum ersten Unfallsignal (Si1) und zum zweiten Unfallsignal (Si2); f4) Erzeugen und periodisches Senden eines Unfallüberwachungssignals (Smi), das den Vitalparametern (SetV) zugeordnet ist, an die mindestens eine externe Vorrichtung, die den Rettungsdiensten zugeordnet ist, falls das erste oder zweite Unfallsignal (Si1, Si2) erzeugt wird.

8. Verfahren zum Erfassen eines Unfalls (1) nach Anspruch 7, wobei Schritt f1), falls die Unfallsignale (Si1, Si2) erzeugt werden, die folgenden Unterschritte umfasst: f1.1) Identifizieren, ob die mobile Vorrichtung (10) an Land oder im Wasser positioniert ist, basierend auf dem ersten Datensatz (Set1) und Erzeugen eines entsprechenden Landsignals (Ste) oder Wassersignals (Sac); f1.2) mittels eines Tiefensensors (70) in Signalkommunikation mit der mobilen Vorrichtung (10), falls ein Wassersignal (Sac) erzeugt wird, Erfassen eines Datensatzes, der repräsentativ für die Tiefe (SetPro) ist, in der der Tiefensensor (70) in Bezug auf den Wasserspiegel liegt; f1.3) Erzeugen, in Zeitintervallen, eines Tiefenüberwachungssignals (Spro), das repräsentativ für die Tiefe ist, in der der Tiefensensor (70) liegt, basierend auf dem zugehörigen Datensatz (SetPro); f1.4) periodisches Senden der Tiefenüberwachungssignale (Spro) an die mindestens eine externe Vorrichtung (20), die den Rettungsdiensten zugeordnet ist.

9. Verfahren zum Erfassen eines Unfalls (1) nach einem der Ansprüche 4 bis 8, ferner umfassend einen Schritt h) des Überwachens des Unfalls durch erste Bilderfassungsvorrichtungen (40), die dem Fahrzeug (100) zugeordnet sind, falls ein erstes oder ein zweites Unfallsignal (Si1, Si2) erzeugt wird, wobei der Schritt h) die Schritte umfasst: h1) Erfassen eines ersten Bildstroms (F1) von jeder ersten Bilderfassungsvorrichtung (40); h2) Senden jedes ersten Bildstroms an die mobile Vorrichtung (10) in Signalkommunikation mit jeder ersten Bilderfassungsvorrichtung (40); h3) Identifizieren eines ersten Unfallzustands (St1) durch Vergleichen des ersten Bildstroms mit Beispielbildern (Im) und Erzeugen eines zugehörigen ersten Zustandssignals (SSt1); h4) Senden des ersten Zustandssignals (SSt1) an mindestens die externe Vorrichtung, die den Rettungsdiensten zugeordnet ist; h5) Wiederholen der Schritte h3) und h4) in Kontrollzeitintervallen.

10. Verfahren zum Erfassen eines Unfalls (1) nach Anspruch 9, wobei Schritt h) das Herstellen einer Signalkommunikation der mobilen Vorrichtung (10) mit zweiten, zum Fahrzeug (100) externen Bilderfassungsvorrichtungen (50) einbezieht, falls ein erstes oder ein zweites Unfallsignal (Si1, Si2) erzeugt wird, wobei der Schritt h) die Schritte umfasst: h6) Erfassen eines zweiten Bildstroms (F2) von jeder zweiten Bilderfassungsvorrichtung (50); h7) Senden jedes zweiten Bildstroms (F2) an die mobile Vorrichtung (10) in Signalkommunikation mit jeder zweiten Bilderfassungsvorrichtung (50); h8) Identifizieren eines zweiten Unfallzustands (St2) durch Vergleichen des zweiten Bildstroms mit den Beispielbildern und Erzeugen eines zugehörigen Zustandssignals (SSt2); h9) Senden des zweiten Zustandssignals (SSt2) an mindestens die externe Vorrichtung, die den Rettungsdiensten zugeordnet ist; h10) Wiederholen der Schritte h8) und h9) in Kontrollzeitintervallen.

11. Verfahren zum Erfassen eines Unfalls (1) nach einem der Ansprüche 4 bis 10, ferner umfassend einen Schritt i) des Unterstützens des Benutzers, falls ein erstes oder ein zweites Unfallsignal (Si1, Si2) erzeugt wird, wobei Schritt i) die Schritte umfasst: i1) Erfassen der Benutzerinformationen aus dem vorläufigen Datensatz (SetPr) und den Vitalparametern (SetV); i2) Erfassen eines dritten Bildstroms (F3) durch eine in der mobilen Vorrichtung (10) als ein zweiter Sensor (S2) eingebettete Bilderfassungsvorrichtung; i3) Identifizieren eines aktuellen Unfallzustands (Sa) durch Verarbeiten des Bildstroms; i4) Erzeugen von Leitlinien (Lg) basierend auf dem aktuellen Zustand und den Benutzerinformationen; i5) Projizieren der Leitlinien und Anweisungen auf eine Benutzerschnittstelle, die der mobilen Vorrichtung zugeordnet ist.

12. Verfahren zum Erfassen eines Unfalls (1) nach den Ansprüchen 1, 4, 9, 10 und 11, einbeziehend die Verwendung eines Algorithmus der künstlichen Intelligenz zum Erfassen eines Unfallzustands, um das erste Unfallsignal und das zweite Unfallsignal, die Zustandssignale und die Leitlinien durch eine trainierbare Vorhersagefunktion zu erzeugen, wobei der Algorithmus der künstlichen Intelligenz die von den Sensoren erfassten Datensätze und die Bildströme als eine Eingabe empfängt, und um das erste oder das zweite Unfallsignal, die Zustandssignale und die Leitlinien auszugeben, wobei der Algorithmus der künstlichen Intelligenz über die der Vorhersagefunktion zugeordneten Schwellenwerte und Beispielbilder verfügt, wobei der Algorithmus der künstlichen Intelligenz eine Trainingsfunktion umfasst, die konfiguriert ist, um Lerndatensätze basierend auf den Unfallzuständen, den Zustands- und Steuersignalen zu akquirieren und die Vorhersagefunktion zu modifizieren.

## Revendications

1. Procédé de détection d'un accident (1) d'un véhicule (100) mis en œuvre par un dispositif mobile (10) associé à un utilisateur dans le véhicule (100), comprenant les étapes consistant à : a) capturer un premier ensemble de données (Set1) par des premiers capteurs de géolocalisation (S1) intégrés dans le dispositif mobile (10) à des intervalles de temps d'échantillonnage ; b) calculer une vitesse de croisière de véhicule (Vc) par le premier ensemble de données (Set1) dans chaque intervalle de temps d'échantillonnage ; c) identifier un freinage brusque (Fb) dans le cas où une comparaison entre des vitesses de croisière (Vc) dans des intervalles de temps d'échantillonnage temporellement successifs dépasse des premières valeurs de seuil prédéfinies (Vs1) ; d) si un freinage brusque (Fb) est identifié, capturer un second ensemble de données (Set2) par des seconds capteurs (S2) intégrés dans le dispositif (10), et identifier une condition d'accident (Ci) en comparant des valeurs associées au second ensemble de données (Set2) et des secondes valeurs de seuil prédéfinies (Vs2), ledit second ensemble de données (Set2) étant représentatif des conditions à l'intérieur du véhicule (100) ; e) si une condition d'accident (Ci) est identifiée, générer un premier signal d'accident (Si1) ; f) envoyer le premier signal d'accident (Si1) depuis le dispositif mobile (10) associé à l'utilisateur à un ou plusieurs dispositifs externes (20) placés en communication de signal l'un avec l'autre, au moins un dispositif externe (20) étant associé aux services de secours ; **caractérisé en ce que** l'étape d) implique la capture de données relatives à des demandes d'aide générées par l'interaction entre l'utilisateur et le dispositif (10), l'étape d) comprenant les étapes consistant à : d6) si un freinage brusque (Fb) est identifié, activer des capteurs de pression (12) intégrés dans le dispositif (10), lesdits seconds capteurs (S2) comprenant les capteurs de pression ; d7) détecter l'interaction (Int) de l'utilisateur avec le dispositif mobile (10) par les capteurs de pression (12) activés dans le cas où l'interaction correspond aux secondes valeurs de seuil prédéfinies (Vs2) relatives à une interaction de l'utilisateur avec le dispositif mobile (10) ; d8) générer un signal de confirmation d'accident (SCo) dans le cas où l'interaction sur le dispositif mobile (10) est détectée ; d9) identifier la condition d'accident (Ci) en générant un signal de condition d'accident associé (SCi) dans le cas où le signal de confirmation d'accident (SCo) est généré.

2. Procédé de détection d'un accident (1) selon la revendication 1, dans lequel l'étape d) implique la capture de données relatives à des sons à l'intérieur du véhicule (100) par un microphone (11) intégré dans le dispositif en tant que l'un des seconds capteurs (S2), l'étape d) comprenant les étapes consistant à : d1) si un freinage brusque (Fb) est identifié, activer le microphone (11) ; d2) enregistrer des sons à l'intérieur du véhicule par le microphone (11) ; d3) identifier un bruit fort (Rf) dans le cas où les sons enregistrés dépassent les secondes valeurs de seuil prédéfinies (Vs2) relatives aux bruits, et générer un signal de bruit fort (SRf) ; d4) identifier une demande d'aide (Ra) dans le cas où les sons enregistrés (Rs) correspondent aux secondes valeurs de seuil prédéfinies (Vs2) relatives à une demande d'aide, et générer un signal de demande d'aide (SRa) ; d5) identifier la condition d'accident (Ci) en générant un signal de condition d'accident associé (SCi) dans le cas où un signal de bruit fort (SRf) ou un signal de demande d'aide (SRa) est généré.

3. Procédé de détection d'un accident (1) selon l'une quelconque des revendications 1 à 2, dans lequel l'étape a) comprend les étapes consistant à : a1) capturer un ensemble de données préliminaire (SetPr) relatif aux utilisateurs situés dans le véhicule par une saisie depuis une interface utilisateur (14) associée au dispositif mobile (10) ; a2) capturer des paramètres vitaux (SetV) des utilisateurs situés dans le véhicule par des dispositifs de capture de paramètres vitaux (30) associés aux utilisateurs situés dans le véhicule ; a3) associer les paramètres vitaux (SetV) à chaque ensemble de données préliminaire associé (SetPr).

4. Procédé de détection d'un accident (1) selon la revendication 3, comprenant en outre une étape g) de surveillance des paramètres vitaux, l'étape g) comprenant les étapes consistant à : g1) comparer, dans des intervalles de temps d'échantillonnage, les paramètres vitaux (SetV) de chaque utilisateur avec des troisièmes valeurs de seuil prédéfinies (Vs3) ; g2) générer un signal de contrôle (Sc) dans le cas où les valeurs des paramètres vitaux (SetV) dépassent les troisièmes valeurs de seuil prédéfinies (Vs3) dans plusieurs intervalles de temps d'échantillonnage temporellement successifs ; g3) dans le cas où un signal de contrôle (Sc) est généré, attendre pendant un intervalle de temps de contrôle une interaction de l'utilisateur avec le dispositif par des capteurs de pression (12) intégrés dans le dispositif (10) pour générer un signal d'interaction (Sint), sinon générer un signal de non-interaction (Snon), les seconds capteurs (S2) comprenant les capteurs de pression (12) ; g4) générer un second signal d'accident (Si2) dans le cas où, dans l'intervalle de temps de contrôle, un signal de non-interaction (Snon) est généré.

5. Procédé de détection d'un accident (1) selon la revendication 4, dans lequel l'étape f) implique l'envoi du second signal d'accident depuis le dispositif mobile (10) à au moins le dispositif externe (20) associé aux services de secours.

6. Procédé de détection d'un accident (1) selon l'une quelconque des revendications 3 à 5, dans lequel l'étape d) implique l'identification d'une condition d'accident (Ci) en comparant les paramètres vitaux (SetV) avec des quatrièmes valeurs de seuil (Vs4) associées à une condition d'accident, l'étape d) comprenant les étapes consistant à : d10) si un freinage brusque (Fb) est identifié, comparer les paramètres vitaux (SetV) avec les quatrièmes valeurs de seuil (Vs4) ; d11) générer un signal d'urgence vitale (SeV) dans le cas où les paramètres vitaux (SetV) se situent dans la plage d'urgence des quatrièmes valeurs de seuil (Vs4) ; d12) identifier la condition d'accident (Ci) en générant un signal de condition d'accident associé (SCi) dans le cas où un signal d'urgence vitale (SeV) est généré.

7. Procédé de détection d'un accident (1) selon l'une quelconque des revendications 2 à 6, dans lequel l'étape f) comprend les étapes consistant à : f1) détecter un emplacement de l'accident à partir du premier ensemble de données (Set1) par les premiers capteurs de géolocalisation (S1) ; f2) associer l'emplacement de l'accident au premier signal d'accident (Si1) et au second signal d'accident (Si2) ; f3) associer les informations de l'utilisateur au premier signal d'accident (Si1) et au second signal d'accident (Si2) ; f4) générer et envoyer périodiquement un signal de surveillance d'accident (Smi) associé aux paramètres vitaux (SetV) à l'au moins un dispositif externe associé aux services de secours, dans le cas où le premier ou le second signal d'accident (Si1, Si2) est généré.

8. Procédé de détection d'un accident (1) selon la revendication 7, dans lequel l'étape f1), dans le cas où les signaux d'accident (Si1, Si2) sont générés, comprend les sous-étapes consistant à : f1.1) identifier si le dispositif mobile (10) est positionné sur terre ou sur l'eau sur la base du premier ensemble de données (Set1) et générer un signal terrestre (Ste) ou un signal aquatique (Sac) respectif ; f1.2) par un capteur de profondeur (70) en communication de signal avec le dispositif mobile (10), dans le cas où un signal aquatique (Sac) est généré, capturer un ensemble de données représentatif de la profondeur (SetPro) à laquelle le capteur de profondeur (70) se trouve par rapport au niveau de l'eau ; f1.3) générer, à des intervalles de temps, un signal de surveillance de profondeur (Spro) représentatif de la profondeur par rapport au niveau de l'eau à laquelle le capteur de profondeur (70) se trouve, sur la base de l'ensemble de données associé (SetPro) ; f1.4) envoyer périodiquement les signaux de surveillance de profondeur (Spro) à l'au moins un dispositif externe (20) associé aux services de secours.

9. Procédé de détection d'un accident (1) selon l'une quelconque des revendications 4 à 8, comprenant en outre une étape h) de surveillance de l'accident par des premiers dispositifs de capture d'image (40) associés au véhicule (100) dans le cas où un premier ou un second signal d'accident (Si1, Si2) est généré, ladite étape h) comprenant les étapes consistant à : h1) capturer un premier flux d'images (F1) depuis chaque premier dispositif de capture d'image (40) ; h2) envoyer chaque premier flux d'images au dispositif mobile (10) en communication de signal avec chaque premier dispositif de capture d'image (40) ; h3) identifier un premier état d'accident (St1) en comparant le premier flux d'images avec des images d'échantillon (Im), et générer un premier signal d'état associé (SSt1) ; h4) envoyer le premier signal d'état (SSt1) à au moins le dispositif externe associé aux services de secours ; h5) répéter les étapes h3) et h4) à des intervalles de temps de contrôle.

10. Procédé de détection d'un accident (1) selon la revendication 9, dans lequel l'étape h) implique la mise en communication de signal du dispositif mobile (10) avec des seconds dispositifs de capture d'image (50) externes au véhicule (100) dans le cas où un premier ou un second signal d'accident (Si1, Si2) est généré, ladite étape h) comprenant les étapes consistant à : h6) capturer un second flux d'images (F2) depuis chaque second dispositif de capture d'image (50) ; h7) envoyer chaque second flux d'images (F2) au dispositif mobile (10) en communication de signal avec chaque second dispositif de capture d'image (50) ; h8) identifier un second état d'accident (St2) en comparant le second flux d'images avec les images d'échantillon, et générer un signal d'état associé (SSt2) ; h9) envoyer le second signal d'état (SSt2) à au moins le dispositif externe associé aux services de secours ; h10) répéter les étapes h8) et h9) à des intervalles de temps de contrôle.

11. Procédé de détection d'un accident (1) selon l'une quelconque des revendications 4 à 10, comprenant en outre une étape i) d'assistance à l'utilisateur dans le cas où un premier ou un second signal d'accident (Si1, Si2) est généré, l'étape i) comprenant les étapes consistant à : i1) capturer les informations de l'utilisateur à partir de l'ensemble de données préliminaire (SetPr) et des paramètres vitaux (SetV) ; i2) capturer un troisième flux d'images (F3) par un dispositif de capture d'image intégré dans le dispositif mobile (10) en tant que second capteur (S2) ; i3) identifier un état d'accident actuel (Sa) en traitant le flux d'images ; i4) générer des lignes directrices (Lg) sur la base de l'état actuel et des informations de l'utilisateur ; i5) projeter les lignes directrices et les instructions sur une interface utilisateur associée au dispositif mobile.

12. Procédé de détection d'un accident (1) selon les revendications 1, 4, 9, 10 et 11, impliquant l'utilisation d'un algorithme d'intelligence artificielle pour détecter une condition d'accident de manière à générer le premier signal d'accident et le second signal d'accident, les signaux d'état et les lignes directrices par une fonction de prédiction entraînable, ledit algorithme d'intelligence artificielle recevant en entrée les ensembles de données capturés par les capteurs et les flux d'images, et afin de délivrer en sortie le premier ou le second signal d'accident, les signaux d'état et les lignes directrices, l'algorithme d'intelligence artificielle ayant à sa disposition les valeurs de seuil et les images d'échantillon associées à la fonction de prédiction, l'algorithme d'intelligence artificielle comprenant une fonction d'entraînement configurée pour acquérir des ensembles de données d'apprentissage sur la base des conditions d'accident, des signaux d'état et de contrôle, et pour modifier la fonction de prédiction.
